# EUROPÄISCHE PATENTSCHRIFT

(11) **EP 1 959 104 B1**
(45) Veröffentlichungstag und Bekanntmachung des Hinweises auf die Patenterteilung: **02.06.2010**
(21) Anmeldenummer: 07003354.3
(22) Anmeldetag: 16.02.2007
(51) Int. Cl.: F01D 25/30, F02C 7/24

(54) **Isoliersystem einer Gasturbinenanlage**
Insulating system of a gas turbine installation
Système isolant d'une installation de turbine à gaz

(43) Veröffentlichungstag der Anmeldung: 20.08.2008
(73) Patentinhaber: G + H Schallschutz GmbH, 67059 Ludwigshafen (DE)
(72) Erfinder: Waga, Peter, 69514 Laudenbach (DE); Spindler, Katrin, 67125 Dannstadt-Schauernheim (DE); Kempf, Ulrich, 67063 Ludwigshafen (DE); Metzler, Hubert, 67147 Forst (DE)
(74) Vertreter: Grünecker, Kinkeldey, Stockmair & Schwanhäusser Anwaltssozietät

(56) Entgegenhaltungen:
- EP-A- 0 791 726
- DE-U1- 9 310 270
- US-A- 6 062 814

## Beschreibung

Die Erfindung betrifft ein Isoliersystem für den Übergangsbereich zwischen dem Kompensator und dem Diffusor einer Gasturbinenanlage, bei dem der Anschlussbereich des Kompensators in einen sich konisch erweiternden Bereich des Diffusors übergeht und im Anschlussbereich des Kompensators eine Außenisolierung und im konisch sich erweiternden Bereich des Diffusors eine Innenisolierung vorhanden ist und mit einem Gasführungsrohr, das im Kompensator verläuft und den heißen Gasstrom zum Diffusor leitet.

Abgastemperaturen von Gasturbinen sind im Laufe der letzten Jahre stetig angestiegen und erreichen Werte von 550°C bis über 640°C. Zum Schutz der eingesetzten Bauteile und der Umgebung sind daher Hochtemperaturisolierungen üblich, die teilweise als Außenisolierung und teilweise als Innenisolierung aufgebaut sind. Eingesetzt werden dabei Hochtemperaturdämmstoffe, die mit speziellen Stahlblechen abgedeckt werden. Bei Innenisolierungen, die der vollen Temperatur des Abgasstromes ausgesetzt sind, sind verschiedene Lösungen bekannt, die die notwendigen Temperaturdehnungen ermöglichen.

Aus dem deutschen Gebrauchsmuster G 9310270 ist ein Verbindungselement für von heißem Rauchgas durchströmbare Kanalstücke bekannt, wobei ein, ein außen isoliertes erstes Kanalstück umgebendes und mit dem tragenden Außenmantel des innen isolierten zweiten Kanalstücks fest verbundenes Formstück verwendet wird, das eine Anzahl von radial verlaufenden Stegen aufweist, deren freie Enden mit dem tragenden Innenmantel des ersten Kanalstücks formschlüssig verbunden sind.

Aus der EP 0791 726 A ist ein gattungsgemäßes Isoliersystem bekannt. Auf der Innenseite des Anfangsbereichs des sich erweiternden Diffusors ist eine Innenisolierung angebracht, die sich in Richtung zum Kompensator hin bis zu einem zylindrischen Zwischenbereich erstreckt. Der Beginn des Diffusors, der Zwischenbereich und der Kompensatorbereich sind zusätzlich von Außenisoliermaterial umgeben.

Die Innenisolierung ist mit einem Innenliner über Bolzen, die über den Umfang verteilt angeordnet sind, gehalten. In diesem Bereich gibt es aber aus Montage- und Temperaturdehnungsgründen unvermeidlich Spalten und Schlitze. Dies kann bei diesem bekannten System zum Austragen von Isolierdämmstoffen im Anfangsbereich der Innenisolierung führen, weil der das Gasführungsrohr verlassende Gasstrom diesen Anfangsbereich unmittelbar anströmt.

In der Praxis hat man auch schon im Anfangsbereich der Innenisolierung einen umlaufenden Stahlring als Schutzabdeckung angeschweißt. Aufgrund der hohen Beanspruchung in diesem Bereich musste dieser Ring relativ dickwandig ausgebildet und schweißtechnisch in hoher Ausführungsqualität gefertigt sein. Dies macht die Herstellung teuer und Zeitaufwändig. Ausserdem kann das aufgrund der Materialanhäufung zu zusätzlichem Spannungseintrag im Anfangsbereich des Diffusors führen.

Demgegenüber liegt der Erfindung die Aufgabe zugrunde, ein Isolierungssystem der gattungsgemäßen Art so weiterzubilden, dass es bei erhöhter Wirksamkeit einfacher, kostengünstiger und spannungsärmer herzustellen ist.

Gelöst wird diese Aufgabe bei einem gattungsgemäßen Isolierungssystem dadurch, dass die Innenisolierung in Richtung zum Kompensator hin wenigstens bis in den Bereich des Endes des Gasführungsrohres reicht.

Mit diesem Merkmal wird also die Innenisolierung in Gegenstromrichtung, das heißt also zum Kompensator hin, so weit geführt, dass sie erst hinter dem Ende des Gasführungsrohres endet. Der das Gasführungsrohr verlassende heiße Gasstrahl kann somit die stromaufwärts weisende Stirnseite der Innenisolierung nicht direkt anströmen. Ein dort einzuschweißender Ring ist daher nicht erforderlich. Es wird also quasi der Beginn der Innenisolierung (stromaufwärts gesehen) in den Strömungsschatten des heißen Gasstrahls gelegt, so dass keine besonderen Dichtungsmaßnahmen erforderlich sind. Dadurch, dass somit der Dichtungsring entfallen kann, wird die Herstellung einfacher, Spannungseintrag wird vermieden und es wird damit eine hohe Funktionssicherheit gewährleistet.

In einer vorteilhaften Ausgestaltung der Erfindung ist vorgesehen, dass die Innenisolierung bis in einen zylindrischen Zwischenbereich zwischen Kompensator und Diffusor reicht. Eine solche Lösung ist insbesondere dann möglich, wenn die von der Außenisolierung umgebene Wand des Kompensators als Faltenbalg ausgebildet ist und das Balgende im Bereich eines Wellenberges mit dem Zwischenbereich verschweißt ist. Der Zwischenbereich beginnt damit (bei angenommenem gleichen Faltenbalgdurchmesser) auf einem größeren Radius zur Mittelachse, so dass bei wiederum angenommenem gleich bleibendem Gasführungsrohrdurchmesser ein größerer Zwischenraum zwischen Gasführungsrohr und Zwischenbereichwandung entsteht. In diesem Bereich kann dann die Innenisolierung einfacher fortgesetzt werden, weil dort im Vergleich zum Stand der Technik nach der EP 0791 726 dann mehr Raum vorhanden ist.

In weiterer Ausgestaltung der Erfindung ist die Innenisolierung aus keilförmig ausgebildeten Matratzensegmenten gebildet. Im Stand der Technik war es hier üblich, loses mit Linerbleche eingefasstes Isoliermaterial zu verwenden. Dadurch, dass nun Matratzensegmente zum Einsatz kommen, wird die Herstellung einfacher und auch die Anordnung. Die Matratzensegmente können dabei in weiterer Ausgestaltung ein Drahtgeflecht, einen Hochtemperaturdämmstoff sowie eine Gewebeabdeckung aufweisen. Sie bilden dabei quasi kissenartige Keile, die gut und einfach platziert werden können. In an sich bekannter Weise können diese Matratzensegmente dann von Linerblechen gehalten werden. Die Linerbleche können bevorzugt über an der Innenwand des Diffusors verteilt angeschweißte, die Matratzensegmente durchsetzende Bolzen gehalten werden.

Wenn die Linerbleche an den Bolzen zwischen zwei einen definierten Abstand bildenden Scheiben gehalten werden, wird einerseits eine gute Befestigung sichergestellt, andererseits besteht genügend Spielraum für Dehnungsbewegungen der Linerbleche. Die Linerbleche werden also zwischen den Scheiben nicht eingeklemmt, sondern mit definiertem Abstand so gehalten, dass sie sich bewegen können. Dies wird insbesondere dadurch dann vereinfacht, wenn die Löcher in den Linerblechen, durch die die Bolzen gesteckt werden, als Langlöcher ausgebildet sind.

In weiterer Ausgestaltung können die Linerbleche als über den Umfang Segmente bildende Abschnitte ausgebildet sein, die an den Stoßstellen unter Bildung von Dehnungsfreiräumen aneinander anschließen. Diese Dehnungsfreiräume können wiederum mit Blechen überdeckt sein, die definierte Abstände haben, um so die notwendigen Bewegungsspielräume zu schaffen.

In weiterer Ausgestaltung der Erfindung weisen die Matratzen in den Bolzendurchtrittsbereichen gelochte Durchführungen auf, die innen und außen mit Ösen als metallische Dichtung versehen sind. Die Matratzensegmente werden also mit definierten Durchführungslöchern versehen und nach außen hin durch eine metallische Dichtung abgedichtet, was der Gefahr des Austrags des Isoliermaterials entgegenwirkt.

Das erfindungsgemäße Isoliersystem ermöglicht es, den Kompensator und den Anfanksbereich des Diffusors mit der Innenisolierung als Bauelement fabrikseitig vorgefertigt herzustellen und als Einheit an den Einsatzort zu verbringen. Das erspart Montageaufwand vor Ort und stellt eine immer gleich bleibende Montagequalität sicher.

Die Erfindung wird nachfolgend anhand des in der Zeichnung dargestellten Ausführungsbeispiels weiter erläutert. Dabei zeigt
- Figur 1: eine Querschnittsdetaildarstellung durch den Übergangsbereich zwischen Kompensator und Diffusor in einer Gasturbinenanlage,
- Figur 2: ein Detail aus dieser Darstellung in derselben Querschnittsansicht (ohne Außenisolierung) und
- Figur 3: ein Matratzensegment als Innenisolierung in schematischer, perspektivischer Darstellung.

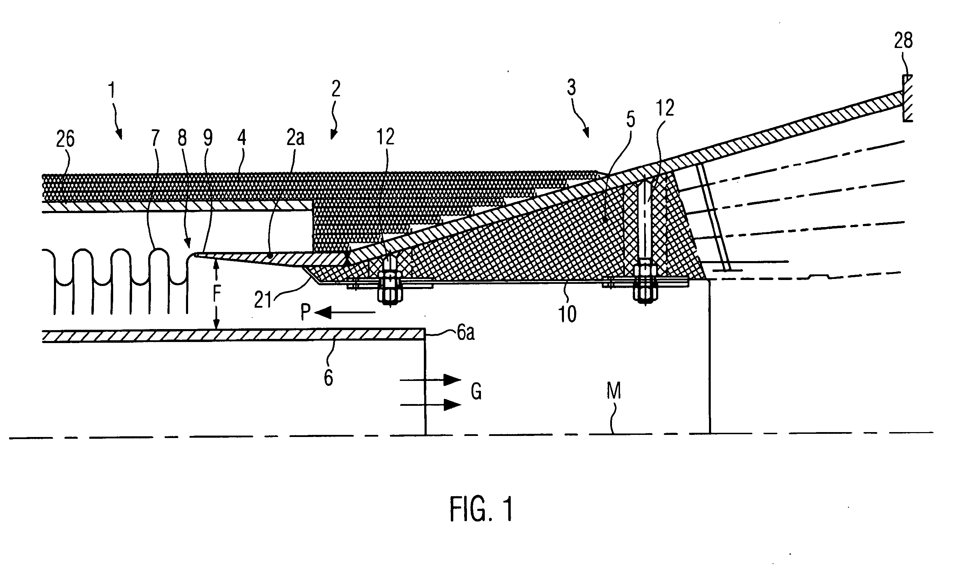

In Figur 1 ist in einer geschnittenen schematischen Darstellung der Übergangsbereich zwischen einem Kompensator 1 und einem Diffusor 3 einer Gasturbinenanlage dargestellt. Zum grundsätzlichen Aufbau einer solchen Anlage kann auf die als gattungsbildende eingangs erwähnte EP 0791 726 verwiesen werden. Die gezeigten Teile sind im wesentlichen rotationssymetrisch zur - allerdings nicht massstabsgerecht eingezeichneten - Mittelachse M angeordnet.

Von links in der Zeichnung kommen die heißen Gase in Pfeilrichtung G aus der nicht dargestellten Turbine durch das Gasführungsrohr 6 mit bis zu 640°C und werden dann in ihrer Strömungsgeschwindigkeit in dem sich konisch erweiternden Diffusor 3 verlangsamt.

Der Kompensator 1 geht hier über einen zylindrischen Zwischenbereich 2 in den Diffusor 3 über. Die als Faltenbalg 7 ausgebildete Wand des Kompensators ist von einem Aussenrohr 26 umgeben, auf dem die Außenisolierung 4 aufgebracht ist, die sich außen auch bis in den beginnenden Bereich des Diffusors erstrecken kann. Der Diffusor ist auf der Innenseite mit einer Innenisolierung 5 versehen, die sich nach rechts forterstreckt. Von besonderem Interesse ist hier aber der dargestellte Übergangsbereich.

Wie man erkennt, erstreckt sich die Innenisolierung 5 stromaufwärts in Pfeilrichtung P bis hinter und über das Ende 6a des Gasführungsrohres bis in den Zwischenbereich 2 hinein.

Das kompensatorseitige Ende der Isolierung 5, das in der Abbildung mit einer Abkantung 21 des Linerbleches 10 abgedeckt ist, liegt damit im Strömungsschatten des aus dem Gasführungsrohr austretenden Gasstrahls und wird also davon nicht direkt angeströmt. Dadurch besteht auch nicht die Gefahr, dass heiße Gase in den Bereich zwischen dem Linerblech 10 und der Innenwand des Diffusors eintreten und Isoliermaterial ausblasen können.

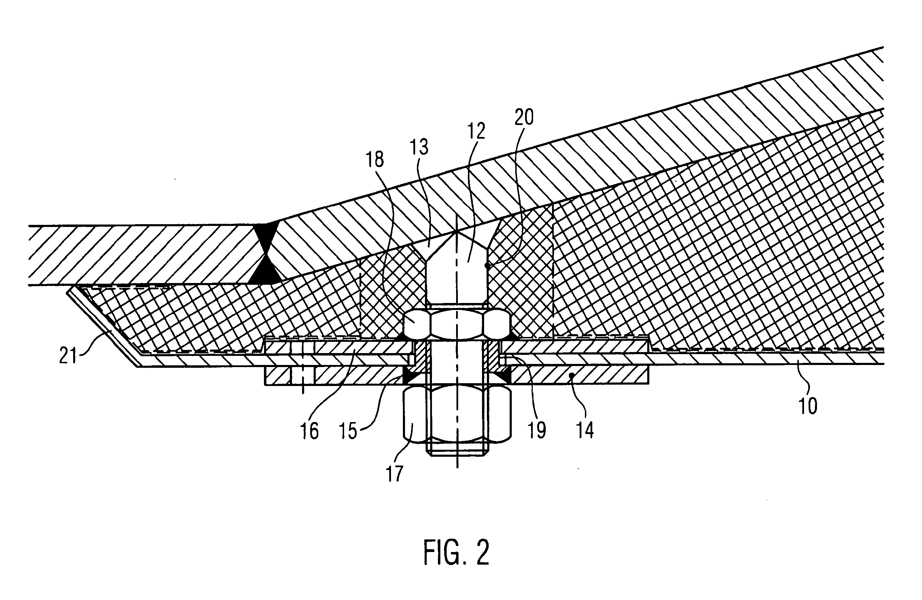

Die Innenisolierung 5 wird über an der Innenwand des Diffusors 3 angeschweißte Bolzen 12 und entsprechende Schraubverbindungen gehalten und positioniert. Dies wird anhand der Figur 2 noch weiter erläutert werden.

Der Faltenbalg 7 des Kompensators ist an seinem Ende 8 in einem Wellenberg 9 des Balgs mit dem Zwischenbereichsstück 2a verbunden. Im Vergleich zum Stand der Technik, bei dem diese Verbindung im Wellental stattfindet, schafft diese Maßnahme einen größeren Freiraum F zwischen dem Außenumfang des Gasführungsrohres 6 und der beginnenden Außenwandung des Diffusors, so dass genügend Platz entsteht, die Innenisolierung 5 bis in diesen Bereich hinein und damit in den Strömungsschatten zu verlegen. Damit kann dieser kritische Übergangsbereich gleichmäßiger isoliert werden. Insbesondere wird kein umlaufender anzuschweißender Ring benötigt, um die Isolierung gegen Eindringen von Gasströmen zu schützen, der das thermische Verhalten des Übergangsbereichs negativ beeinflussen könnte.

Dies führt insgesamt zu gleichmäßigeren Temperaturverläufen in den betroffenen Bauteilen zu günstigen Spannungsverteilungen und damit auch zur Erhöhung der Lebensdauer.

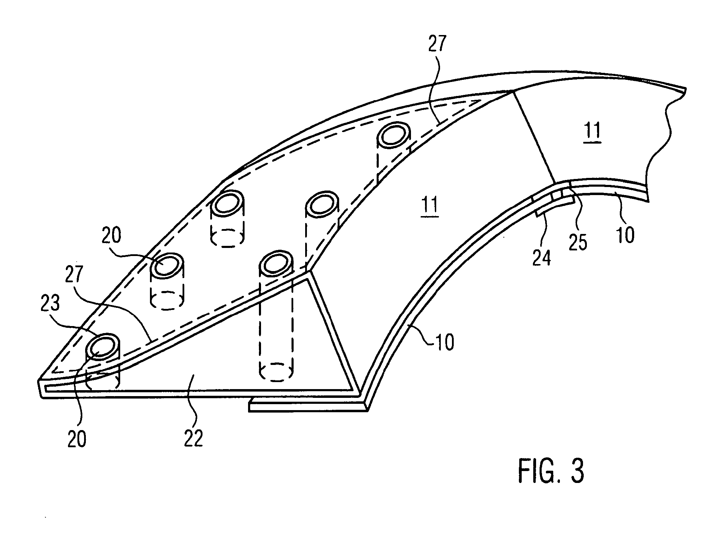

In Figur 2 ist im Detail eine Befestigungsmöglichkeit der Innenisolierung 5 zu erkennen. Die Bolzen 12 sind an die Innenfläche des Diffusors mit Schweißnähten 13 angeschweißt. Im eingebauten Zustand der, wie Figur 3 zeigt, als Matratzensegmente 11 ausgebildeten Innenisolierungssegmente durchdringen die Bolzen 12 Durchführungsöffnungen 20 in dem Matratzensegment. Eine mit der Innenscheibe 16 verschweißte Mutter 18 wird auf den Bolzen geschraubt und danach das Linerblech 10 aufgesteckt, das dann wiederum über die Außenscheibe 14 mit einer aufgeschweißten Mutter 15 gehalten wird. Dadurch, dass die aufgeschweißte Mutter 15 eine bestimmte Höhe hat, besteht ein definierter Freiraum zwischen der Innenscheibe 14 und der Innenscheibe 15, der so bemessen ist, dass das Linerblech zwar gehalten wird, dennoch aber Bewegungsspielraum hat. Angedeutet ist dies durch die vergrößerte Durchstecköffnung , die in Umfangsrichtung als Langloch 19 verlaufen kann. Trotz der exakten Höhenfestlegung kann das Linerblech sich damit in Umfangsrichtung radial bewegen und hat somit Dehnungsfreiräume.

Die in der Figur 1 mit 5 bezeichnete Innenisolierung wird bevorzugt in Form von einzelnen Matratzensegmenten 11 verwirklicht, wie sie in der Figur 3 dargestellt sind. Jedes derartige Matratzensegment ist so ausgebildet, dass eine Vielzahl von Segmenten aneinander gereiht eine kreisförmige und zum Kompensator hin sich verjüngende keilförmige Gesamtisolierung ergeben können. Diese Matratzensegmente bestehen innen aus einem Hochtemperaturisolierwerkstoff und sind außen mit einer genähten Gewebeabdeckung 22 eingefasst. Die Nahtstellen 27 sind gestrichelt angedeutet. Verstärkt werden können diese Segmente noch mit einem eingesetzten, nicht näher dargestellten Drahtgeflecht. Die Öffnungen 20 für die Bolzen 12 können oben und unten mit angedeuteten Ösen 23 eingefasst sein.

Die Matratzensegmente werden von den ebenfalls segmentartig ausgebildeten Linerblechabschnitten 10 gehalten. Die Linerblechabschnitte 10 sind an den Stoßstellen mit Doppelblechen 24 und 25, die miteinander verschweisst werden können, wiederum so gehalten, dass ein Bewegungsspielraum an den Stoßstellen in Umfangsrichtung verbleibt.

Die Isolierung lässt sich aufgrund ihres gesamten Aufbaus grossen Teils werkseitig bereits vorfertigen, so dass Kompensator, der Anfangsbereich des Diffusors ( bis zur Anschlusstelle 28 der weiterfürenden, nicht dargestellten Diffusorwandung ) und die Innenisolierungen als Baueinheit in der Fabrik erzeugt werden können, was eine vereinfachte Montage mit sich bringt.

## Patentansprüche

1. Isoliersystem für den Übergangsbereich zwischen dem Kompensator (1) und dem Diffusor (3) einer Gasturbinenanlage, beinhaltend einen Diffusor (3) und einen Kompensator (1), bei dem der Anschlussbereich des Kompensators in den sich konisch erweiternden Bereich des Diffusors übergeht und im Anschlussbereich des Kompensators eine Außenisolierung (4) und im konisch sich erweiternden Bereich des Diffusors eine Innenisolierung (5) vorhanden ist, sowie mit einem Gasführungsrohr (6), das im Kompensator verläuft und den heißen Gasstrom zum Diffusorbereich leitet,
**dadurch gekennzeichnet, dass**
die Innenisolierung (5) in Richtung zum Kompensator (1) hin gesehen über das Ende (6a) des Gasführungsrohres (6) hinaus reicht.

2. Isoliersystem nach Anspruch 1,
**dadurch gekennzeichnet, dass**
die Innenisolierung (5) bis in den Bereich eines zylindrischen Zwischenbereiches (2) zwischen Kompensator und Diffusor reicht.

3. Isoliersystem nach Anspruch 1 oder 2,
**dadurch gekennzeichnet, dass**
die von der Außenisolierung (4) umgebene Wand des Kompensators (1) als Faltenbalg (7) ausgebildet ist und dass das Balgende (8) im Bereich eines Wellenbergs (9) mit dem Zwischenbereich (2) verschweißt ist.

4. Isoliersystem nach einem der vorangegangenen Ansprüche,
**dadurch gekennzeichnet, dass**
die Innenisolierung (5) von keilförmig ausgebildeten Matratzensegmenten (11) gebildet wird.

5. Isoliersystem nach Anspruch 4,
**dadurch gekennzeichnet, dass**
die Matratzensegmente (11) ein Drahtgeflecht, einen Hochtemperaturdämmstoff sowie eine genähte Gewebeabdeckung (22) aufweisen.

6. Isoliersystem nach Anspruch 4 oder 5,
**dadurch gekennzeichnet, dass**
die Matratzensegmente (11) von Linerblechen (10) gehalten werden.

7. Isoliersystem nach Anspruch 6,
**dadurch gekennzeichnet, dass**
die Linerbleche (10) über an der Innenwand des Diffusors (3) verteilt angeschweißte, die Matratzensegmente durchsetzende Bolzen (12) gehalten werden.

8. Isoliersystem nach Anspruch 7,
**dadurch gekennzeichnet, dass**
die Linerbleche (10) an den Bolzen (12) zwischen zwei einen definierten Abstand bildenden Scheiben (14, 16) gehalten werden.

9. Isoliersystem nach einem der Ansprüche 6 oder 7,
**dadurch gekennzeichnet, dass**
die Linerbleche (10) als über den Umfang Segmente bildende Abschnitte ausgebildet sind, die an den Stoßstellen unter Bildung von Dehnungsfreiräumen über Haltebleche (24, 25) aneinander anschließen.

10. Isoliersystem nach Anspruch 4,
**dadurch gekennzeichnet, dass**
die Matratzensegmente in den Bolzendurchtrittsbereichen gelochte Durchführungen (20) aufweisen, die innen und außen mit Ösen als metallische Dichtung versehen sind.

11. Isoliersystem nach einem der vorangegangenen Ansprüche,
**dadurch gekennzeichnet, dass**
der Kompensator (1) und der Anfansbereich des Diffusors (2) als Bauelement mit der Innenisolierung vorgefertigt fabrikseitig hergestellt werden.

## Claims

1. An insulating system for the transition region between the compensator (1) and the diffuser (3) of a gas turbine installation, comprising a diffuser (3) and a compensator (1), in which the connecting region of the compensator merges into the conically widening region of the diffuser and an external insulation (4) is present in the connecting region of the compensator and an internal insulation (5) is present in the conically widening region of the diffuser, and having a gas guide pipe (6) which extends in the compensator and conducts the hot gas flow to the diffuser region,
**characterised in that**
the internal insulation (5) extends beyond the end (6a) of the gas guide pipe (6) as seen in the direction of the compensator (1).

2. An insulating system according to Claim 1,
**characterised in that**
the internal insulation (5) extends into the region of a cylindrical intermediate region (2) between the compensator and diffuser.

3. An insulating system according to Claim 1 or 2,
**characterised in that**
the wall of the compensator (1) which is surrounded by the external insulation (4) is constructed as bellows (7) and **in that** the bellows end (8) is welded to the intermediate region (2) in the region of a wave crest (9).

4. An insulating system according to one of the preceding claims,
**characterised in that**
the internal insulation (5) is formed by mattress segments (11) of a wedge-shaped construction.

5. An insulating system according to Claim 4,
**characterised in that**
the mattress segments (11) have a wire mesh, a high-temperature insulating material and a stitched fabric cover (22).

6. An insulating system according to Claim 4 or 5,
**characterised in that**
the mattress segments (11) are held by liner sheets (10).

7. An insulating system according to Claim 6,
**characterised in that**
the liner sheets (10) are held by way of bolts (12) which penetrate the mattress segments and are welded to the inner wall of the diffuser (3) in distributed manner.

8. An insulating system according to Claim 7,
**characterised in that**
the liner sheets (10) are held at the bolts (12) between two plates (14, 16) forming a defined spacing.

9. An insulating system according to one of Claims 6 or 7,
**characterised in that**
the liner sheets (10) are constructed as portions forming segments over the circumference, which are connected to one another at the joining points by way of holding plates (24, 25) to form expansion clearances.

10. An insulating system according to Claim 4,
**characterised in that**
the mattress segments have perforated bushings (20) in the bolt passage regions, which bushings are provided on the inside and outside with eyes acting as a metal seal.

11. An insulating system according to one of the preceding claims,
**characterised in that**
the compensator (1) and the start region of the diffuser (2) are manufactured at the factory such that they are prefabricated as a structural element with the internal insulation.

## Revendications

1. Système isolant pour la zone de transition entre le compensateur (1) et le diffuseur (3) d'une installation de turbine à gaz contenant un diffuseur (3) et un compensateur (1), dans lequel la zone de raccordement du compensateur se prolonge par la zone élargie en cône du diffuseur et il est prévu dans ladite zone de raccordement du compensateur une isolation extérieure (4), et dans la zone élargie en cône du diffuseur une isolation intérieure (5), et avec un tuyau d'écoulement de gaz (6) qui s'étend dans le compensateur et qui amène le courant de gaz chaud dans le zone du diffuseur,
**caractérisé en ce que** l'isolation intérieure (5) dépasse de l'extrémité (6a) du tuyau d'écoulement de gaz (6), vers le compensateur (1).

2. Système isolant selon la revendication 1, **caractérisé en ce que** l'isolation intérieure (5) va jusque dans la zone d'une zone intermédiaire cylindrique (2) entre le compensateur et le diffuseur.

3. Système isolant selon la revendication 1 ou 2, **caractérisé en ce que** la paroi du compensateur (1) qui est entourée par l'isolation extérieure (4) est conçue comme un soufflet (7), et **en ce que** l'extrémité de soufflet (8) est soudée à la zone intermédiaire (2) dans la zone d'un sommet d'ondulation (9).

4. Système isolant selon l'une des revendications précédentes, **caractérisé en ce que** l'isolation intérieure (5) est formée par des segments de matelas cunéiformes (11).

5. Système isolant selon la revendication 4, **caractérisé en ce que** les segments de matelas (11) présentent un treillis métallique, un matériau isolant pour températures élevées et un revêtement en tissu cousu (22).

6. Système isolant selon la revendication 4 ou 5, **caractérisé en ce que** les segments de matelas (11) sont fixés à l'aide de tôles de recouvrement (10).

7. Système isolant selon la revendication 6, **caractérisé en ce que** les tôles de recouvrement (10) sont fixées grâce à des tiges (12) qui sont réparties et soudées sur la paroi intérieure du diffuseur (3) et qui traversent les segments de matelas.

8. Système isolant selon la revendication 7, **caractérisé en ce que** les tôles de recouvrement (10) sont fixées aux tiges (12) entre deux plaques (14, 16) qui forment un écartement défini.

9. Système isolant selon l'une des revendications 6 ou 7, **caractérisé en ce que** les tôles de recouvrement (10) sont conçues comme des sections qui forment des segments, sur la circonférence, et qui se succèdent par l'intermédiaire de tôles de fixation (24, 25) au niveau des joints en formant des espaces libres de dilatation.

10. Système isolant selon la revendication 4, **caractérisé en ce que** les segments de matelas présentent des ouvertures (20), réalisées par perçage des zones de passage de tige, qui sont pourvues à l'intérieur et à l'extérieur d'oeillets comme joints d'étanchéité métallique.

11. Système isolant selon l'une des revendications précédentes, **caractérisé en ce que** le compensateur (1) et la zone initiale du diffuseur (2) sont fabriqués à l'usine sous la forme d'un élément de construction avec l'isolation intérieure préfabriquée.
